# EUROPÄISCHE PATENTSCHRIFT

(11) **EP 1 629 679 B1**
(45) Veröffentlichungstag und Bekanntmachung des Hinweises auf die Patenterteilung: **08.02.2017**
(21) Anmeldenummer: 04739386.3
(22) Anmeldetag: 27.05.2004
(51) Int. Cl.: H04W 4/14, H04W 4/16, H04W 88/18

(54) **VERFAHREN ZUR WEITERVERMITTLUNG VON DATEN BEI NICHTERREICHBARKEIT EINES MOBILFUNKENDGERÄTS**
METHOD FOR REROUTING DATA IN CASE OF UNREACHABILITY OF A MOBILE RADIO TERMINAL
PROCÉDÉ DE RETRANSMISSION DE DONNÉES EN CAS DE NON-ACCESSIBILITE À UN TÉLÉPHONE MOBILE

(30) Priorität: 28.05.2003 DE 10324636
(43) Veröffentlichungstag der Anmeldung: 01.03.2006
(73) Patentinhaber: Vodafone Holding GmbH, 40213 Düsseldorf (DE)
(72) Erfinder: LASINSKI, Gerald, 40545 Düsseldorf (DE); CHRUSCHWITZ, Alexander, 50259 Pulheim (DE); GAUBA, Alok, 40667 Meerbusch (DE); FUNKE, Stephan, 40880 Ratingen (DE); NOEVER, Stephan, 47877 Willich (DE)
(74) Vertreter: Weisbrodt, Bernd
(86) Internationale Anmeldenummer: PCT/EP2004/005707
(87) Internationale Veröffentlichungsnummer: WO 2004/107785

(56) Entgegenhaltungen:
- EP-A- 0 891 109
- EP-A- 1 111 944
- EP-A- 1 294 201
- WO-A-02/082835
- US-A- 5 682 600
- US-A- 5 828 949
- US-A1- 2002 090 963
- US-B1- 6 289 223

## Beschreibung

### Technisches Gebiet

Die Erfindung betrifft ein Verfahren für Mobilfunknetze zur Ver- bzw. Weitervermittlung von digitalen Daten bei Nichterreichbarkeit eines Mobilfunkendgeräts, für welches die digitalen Daten bestimmt sind, wobei das Mobilfunknetz eine Sende- und Empfangseinrichtung sowie eine computergesteuerte Verwaltungseinheit mit einem Speicher enthält, mit folgenden Verfahrensschritten:
a) Zwischenspeichern der digitalen Daten,
b) Überprüfen durch die computergesteuerte Verwaltungseinheit, ob ein weiteres Empfangsgerät erreichbar ist,
c) Übermitteln der Daten bei Erreichbarkeit des weiteren Empfangsgeräts an das weitere Empfangsgerät.

### Stand der Technik

Digitale Daten, zu denen auch Textnachrichten gehören, werden nach dem GSM- (= Global System for Mobile Communications) bzw. UMTS-Standard (=Universal Mobile Telecommunications System) über Mobilfunknetze zwischen Mobilfunkendgeräten und/oder Festnetzgeräten ausgetauscht. Diese Textnachrichten werden insbesondere als SMS (=short message service) und EMS (=enhanced message service) versandt. Der erweiterte Nachrichtendienst EMS ergänzt textbasierte Kurznachrichten SMS um neue Funktionen. Mit EMS können Textnachrichten, Bilder, Töne und Animationen hinzugefügt und an andere EMS-fähige Mobilfunkendgeräte versendet werden. EMS nutzt die gleiche Infrastruktur wie SMS. Entsprechend sollte der Dienst in allen Netzen genutzt werden können.

Nach dem Stand der Technik wird eine Kurznachricht als SMS, beispielsweise mit einem Mobilfunkendgerät, verfasst. Das Mobilfunkendgerät sendet nun über das Mobilfunknetz die SMS an eine SMS-Zentrale, auch Short Message Service Center (SMSC) genannt. Die SMS-Zentrale versucht nun diese Kurznachricht an den gewünschten Empfänger zu senden. Ist der Empfänger nicht erreichbar, so wird solange mit der Versendung der SMS gewartet, bis dieser schließlich erreichbar ist. Nachteil bei diesem Verfahren zum Versenden einer SMS ist, dass die SMS nicht gesendet wird, solange der Empfänger nicht erreichbar ist. Bei wichtigen Nachrichten kann dies u.U. zu großen Problemen führen.

In der US 5 682 600 A und der EP 0 891 109 A2 werden Verfahren zur Steuerung eines Kurznachrichtendienstes in einem Mobilfunknetz beschrieben. Kurznachrichten für einen nicht erreichbaren Empfänger werden von verschiedenen Diensteinrichtungen gespeichert. Ist der Empfänger wieder erreichbar, vermeiden die offenbarten Verfahren die gleichzeitige Übertragung aller gespeicherten Kurznachrichten und damit eine übermäßige Belastung der Netzwerkressourcen. Dazu werden die Nachrichten nacheinander und mit einer einstellbaren Verzögerung an den Empfänger übermittelt. Eine Weiterleitung von digitalen Daten bei Nichterreichbarkeit des Empfängers an andere Endgeräte wird in beiden Druckschriften nicht beschrieben.

Die US 5 828 949 A zeigt eine Kopplung eines Funkmeldeempfängers, auch Pager oder Piepser genannt, mit einem Mobiltelefon auf. Ist das Mobiltelefon bei einem Sprachanruf ausgeschaltet, sendet das Mobilfunknetz über ein Pagernetzwerk eine Nachricht an den Pager. Der Pager schaltet daraufhin das Mobiltelefon an und der Sprachanruf kann empfangen werden. Eine Weiterleitung von digitalen Daten bei Nichterreichbarkeit des Empfängers an andere Endgeräte wird ebenfalls nicht offenbart.

Die US 6 289 223 B1 und die EP 1 111 944 A2 beschreiben Verfahren zum Übermitteln von Kurznachrichten an eine Gruppe von Empfängern. Dabei gibt der Sender einer Kurznachricht dem Kurznachrichtendienst eine Liste von Empfängern vor, an welche die Kurznachricht zu übermitteln ist. Bei Nichterreichbarkeit eines Empfängers ist eine Weiterleitung der Kurznachricht an ein anderes Endgerät nicht vorgesehen.

Die WO 02/82835 A1 stellt ein Verfahren zur Weiterleitung einer Kurznachricht in einem intelligenten Mobilfunknetz dar. Dazu enthält das intelligente Mobilfunknetz über den GSM-Standard hinausgehende funktionale Entitäten: Dienstvermittlungsfunktionseinheit (SSF =Service Switching Funktion) und GSM-Dienststeuerfunktionseinheit (gsmSCF =GSM Service Control Function). Ein Benutzer kann festlegen ob zukünftig eine oder alle an ein Mobilfunkendgerät gerichtete Kurznachrichten stattdessen an ein anderes, vom Benutzer vorgegebenes Endgerät übermittelt werden.

Die EP 1 294 201 A1 beschreibt ein Verfahren zur Weiterleitung einer Textnachricht in einem Mobilfunknetz. Durch Senden eines Steuersignals von einem Mobilfunkendgerät an eine Mobilfunkvermittlungsstation (MSC =Mobil Switching Center) kann ein Benutzer die Weiterleitung von Textnachrichten an ein anderes, vorgegebenes Endgerät aktivieren oder deaktivieren. So werden an ein Mobilfunkendgerät adressierte Textnachrichten an ein anderes Endgerät übermittelt.

Weder die WO 02/82835 A1 noch die EP 1 294 201 A1 beschreiben eine automatische Weiterleitung einer Textnachricht an ein anderes Endgerät bei dem Ereignis der Nichterreichbarkeit des ursprünglich als Empfänger gewählten Mobilfunkendgeräts. Ebenso wird eine Weiterleitung einer Kurznachricht bei dem Ereignis, dass das angewählte Mobilfunkendgerät besetzt ist, nicht aufgezeigt.

Die US 2002/0090 963 A1 offenbart ein Verfahren zur Weiterleitung von Kurznachrichten in einem Mobilfunknetz. Ein Benutzer eines Mobilfunkendgeräts hat die Möglichkeit, ein anderes Endgerät vorzugeben, an welches an das ursprüngliche Mobilfunkendgerät gerichtete Kurznachrichten stattdessen übermittelt werden. Zusätzlich kann der Benutzer festlegen, ob Kurznachrichten immer an das andere Endgerät weitergeleitet werden, oder ob die Weiterleitung nur dann stattfindet, wenn das ursprüngliche Mobilfunkendgerät nicht erreichbar oder wenn es besetzt ist.

Nachteilig ist für einen Benutzer bei diesem Verfahren, dass das vorgegebene, andere Endgerät ebenfalls nicht erreichbar oder besetzt sein kann. Weiterhin kann das vorgegebene, andere Endgerät nicht zum Empfang von digitalen Daten eines bestimmten Formats ausgelegt sein. In diesen Fällen sind digitale Daten trotz aktivierter Weiterleitung nicht zustellbar.

### Offenbarung der Erfindung

Aufgabe der Erfindung ist es daher, die genannten Probleme des Standes der Technik zu lösen und ein Verfahren zu schaffen, die digitalen Daten zu übermitteln, obwohl der vorbestimmte Empfänger nicht erreichbar ist.

Erfindungsgemäß wird die Aufgabe mit einem Verfahren der eingangs genannten Art für Mobilfunknetze zur Ver- bzw. Weitervermittlung von digitalen Daten bei Nichterreichbarkeit eines Mobilfunkendgeräts, für welches die digitalen Daten bestimmt sind, wobei das Mobilfunknetz eine Sende- und Empfangseinrichtung sowie eine computergesteuerte Verwaltungseinheit mit einem Speicher enthält, mit folgenden Verfahrensschritten gelöst:
a) Zwischenspeichern der digitalen Daten in einem Zwischenspeicher,
b) Überprüfen durch die computergesteuerte Verwaltungseinheit, ob ein weiteres Empfangsgerät erreichbar ist,
c) Übermitteln der Daten bei Erreichbarkeit des weiteren Empfangsgeräts an das weitere Empfangsgerät, dadurch gekennzeichnet, dass
d) weitere Empfangsgeräte vorgegeben werden können und für die weiteren Endgeräte eine Übermittlungsreihenfolge einstellbar ist.

Die Erfindung beruht auf dem Prinzip, die digitalen Daten nicht in einem Zwischenspeicher zu halten, falls der vorbestimmte Empfänger nicht erreichbar ist. Sie werden stattdessen wenigstens an einen empfangsbereiten Ersatzempfänger gesendet. Der Ersatzempfänger, der die digitalen Daten empfangen darf, kann zuvor festgelegt werden. Dabei können weitere Empfangsgeräte vorgegeben werden. Sollte nämlich ein Ersatzgerät ebenfalls nicht erreichbar sein, so kann auf eines oder mehrere weitere Ersatzgeräte zugegriffen werden, um die digitalen Daten zu übermitteln. Weiterhin ist erfindungsgemäß für weitere Endgeräte eine Übermittlungsreihenfolge einstellbar. Je nachdem, ob auch eines der weiteren Endgeräte nicht erreichbar ist, kann ein nächstes nach einer bestimmten Reihenfolge ausgewählt werden.

Als vorteilhafte Ausgestaltung der Erfindung erweist sich, wenn bei dem erfindungsgemäßen Verfahren für Mobilfunknetze zur Ver- bzw. Weitervermittlung von digitalen Daten bei Nichterreichbarkeit eines Mobilfunkendgeräts die Überprüfung der Erreichbarkeit in vorgebbaren Intervallabständen oder bei Bedarf kontinuierlich erfolgt. Durch diese Maßnahme wird erreicht, dass der Mobilfunknetzbetreiber oder der Mobilfunkteilnehmer selbst bestimmen und einstellen kann, wann bzw. wie oft überprüft werden soll, ob ein Mobilfunkendgerät erreichbar ist. Alternativ hierzu kann eine ständige Überprüfung erfolgen, ob ein Teilnehmer erreichbar ist.

In einer vorteilhaften Ausgestaltung des erfindungsgemäßen Verfahrens sind die digitalen Daten wahlweise als SMS (= short message service) oder EMS (= enhanced message service) ausgebildet. SMS und EMS sind standardisierte Methoden im GSM- und UMTS-Standard, um digitale Daten, insbesondere Textdaten, zwischen Mobilfunkendgeräten über ein Mobilfunknetz auszutauschen. Diese Methode zur Versendung von digitalen Daten lässt sich daher besonders gut, d. h. ohne großen zusätzlichen technischen Aufwand, auf das erfindungsgemäße Verfahren anwenden.

Vorzugsweise handelt es sich bei denen digitalen Daten um Text- und/oder Sprachdaten, die übermittelt werden.

Eine weitere bevorzugte Ausgestaltung des erfindungsgemäßen Verfahrens ergibt sich, indem das weitere Empfangsgerät durch den Benutzer des Mobilfunkendgeräts vorgebbar ist. Durch diese Maßnahme kann der Benutzer des Mobilfunkendgeräts definitiv festlegen, welchem Empfangsgerät er möglicherweise die digitalen Daten ersatzweise zusenden möchte.

In einer vorteilhaften Ausgestaltung der Erfindung ist ferner vorgesehen, dass mehrere und/oder verschiedene weitere Empfangsgeräte einstellbar sind. Damit können die digitalen Daten, falls auch der erste Ersatzempfänger nicht erreichbar ist, an weitere Ersatzempfänger weitergeleitet werden.

Da es vorkommen kann, dass die digitalen Daten nicht von jedem Empfangsgerät verarbeitet werden können, ist eine vorteilhafte Ausgestaltung des erfindungsgemäßen Verfahrens, dass je nach Art der Daten ein geeignetes weiteres Empfangsgerät ausgewählt wird.

In einer weiteren bevorzugten Ausbildung der Erfindung werden die digitalen Daten gleichzeitig an mehrere weitere Endgeräte weitervermittelt. Hierdurch können gleichzeitig mehrere Empfangsgeräte angesprochen werden, für die die digitalen Daten unter Umständen relevant sind.

Um Missbrauch zu verhindern, ist es besonders vorteilhaft, wenn die übermittelten Daten verschlüsselt sind. Unbefugten fällt es dadurch schwer, die digitalen Daten unberechtigt zu benutzen.

Bei den zusätzlichen Empfangsgeräten, an die die digitalen Daten ersatzweise gesendet werden, kann es sich um Festnetzeinrichtungen, wie Computer und dergleichen handeln. Es soll daher herausgehoben werden, dass es besonders vorteilhaft ist, als weiteres Endgerät ein Mobilfunkendgerät zu verwenden.

Vorzugsweise werden die digitalen Daten auf einem Speicher einer SIM-Karte gespeichert.

Weitere Vorteile ergeben sich aus dem Gegenstand der Unteransprüche sowie den Zeichnungen mit den dazugehörigen Beschreibungen.

### Kurze Beschreibung der Zeichnung

- Fig. 1: zeigt in einer Prinzipskizze das .Verfahren, wie es nach dem Stand der Technik zur Übermittlung einer SMS in Mobilfunknetzen abläuft.
- Fig. 2: zeigt in einer Prinzipskizze das erfindungsgemäße Verfahren zur Übermittlung einer SMS in Mobilfunknetzen.

### Bevorzugtes Ausführungsbeispiel

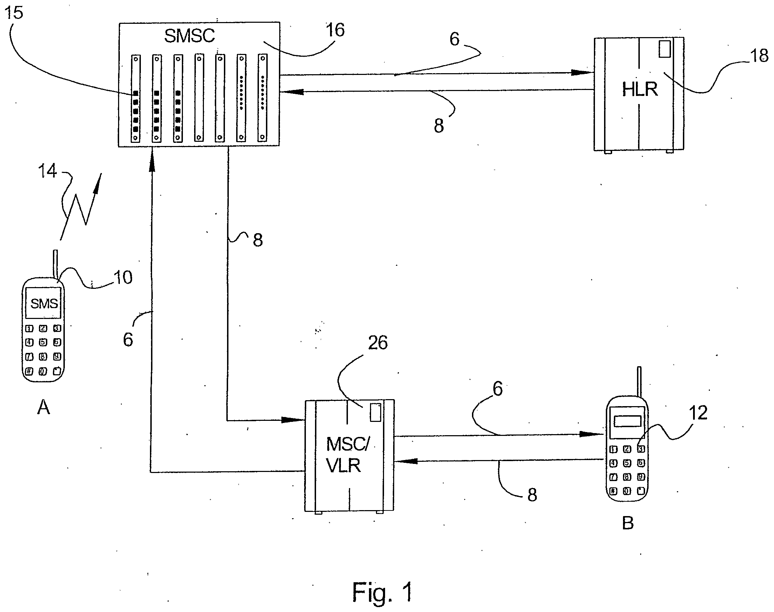

In Fig. 1 wird in einer Prinzipskizze die Übermittlung von digitalen Daten in einem Mobilfunknetz nach dem Stand der Technik dargestellt, wie es bei Mobilfunknetzen nach dem GSM-Standard abläuft. Der Austausch von Daten zwischen verschiedenen Geräten wird mit Pfeilen 6, 8 symbolisiert. Mit 10 wird ein Mobilfunkendgerät bezeichnet, welches von einem ersten Mobilfunkteilnehmer A benutzt wird. Auf dem Mobilfunkendgerät 10 wird eine digitale Kurznachricht (SMS = Short Message Service) erzeugt. Empfänger dieser so erzeugten SMS soll ein weiteres Mobilfunkendgerät 12 eines Mobilfunkteilnehmers B sein. Die SMS wird zum Versenden zunächst über ein Mobilfunknetz, welches durch Pfeil 14 symbolisiert wird, an eine computergesteuerte SMS-Zentrale 16, auch Short Message Service Center (SMSC) genannt, übermittelt. Dort wird die SMS in einem Zwischenspeicher 15 zwischengespeichert.

Die SMS-Zentrale 16 überprüft nun, ob das Mobilfunkendgerät 12 des Mobilfunkteilnehmers B empfangsbereit ist. Die SMS-Zentrale 16 fragt dazu bei dem zuständigen HLR (=Home Location Register) 18 den Status des Mobilfunkendgeräts 12 ab, ob das Mobilfunkendgerät 12 empfangsbereit und wie es erreichbar ist. Im Falle, dass das Mobilfunkendgerät 12 empfangsbereit ist, wird die SMS über die Mobilfunkvermittlungsstelle 26 (MSC) verwendet.

Falls das Mobilfunkendgerät 12 des Mobilfunkteilnehmers B nicht empfangsbereit ist, beispielsweise weil es ausgeschaltet oder in einem Funkloch ist, bleibt die SMS für einen gewissen Zeitraum zunächst zwischengespeichert. Anschließend wird versucht, die SMS in bestimmten Zeitabständen an das Mobilfunkendgerät 12 zu senden. Die Möglichkeit, einen Ersatzempfänger durch den Mobilfunkteilnehmer B für SMS vorzuschlagen, besteht bei den bekannten Verfahren des Standes der Technik, wie er soeben dargelegt wurde, nicht.

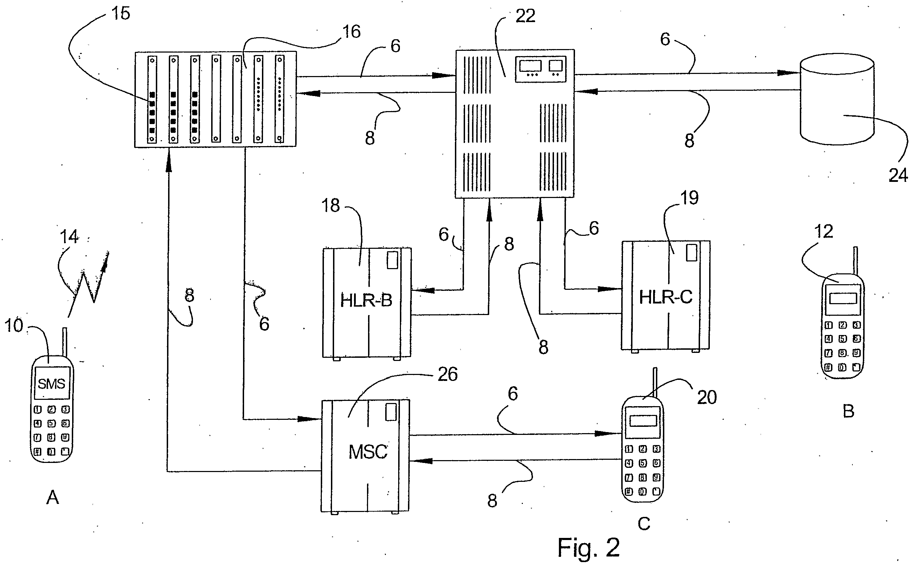

In Fig. 2 wird das erfindungsgemäße Verfahren dargestellt, bei dem der Mobilfunkteilnehmer B einen Mobilfunkteilnehmer C mit einem Mobilfunkendgerät 20 als Ersatzempfänger einstellen wann. Übereinstimmende Bestandteile bzw. Verfahrensschritte werden mit den gleichen Bezugszeichen, wie im vorherigen Ausführungsbeispiel, bezeichnet.

Eine SMS wird von dem Mobilfunkteilnehmer A mit dem Mobilfunkendgerät 10 erzeugt, die nun das Mobilfunkendgerät 12 des Mobilfunkteilnehmers B, analog zum Beispiel von Fig. 1, erreichen soll. Die SMS erreicht über das Mobilfunknetz 14 die SMS-Zentrale 16. Die SMS-Zentrale fragt nun bei einem SMS-Vermittler 22, auch SMS-Router genannt, an, ob das Mobilfunkendgerät 12 des Teilnehmers B erreichbar ist. Der SMS-Vermittler 22 überprüft nun in einer Datenbank 24, ob der Mobilfunkteilnehmer B einen Ersatzempfänger eingestellt hat. Die Einstellung in der Datenbank erfolgt vorzugsweise über das Mobilfunkendgerät 12 selbst oder beispielsweise über das Internet. Das Ergebnis wird dem SMS-Vermittler 22 mitgeteilt.

Wenn der Mobilfunkteilnehmer B einen Ersatzempfänger, beispielsweise Mobilfunkteilnehmer C, eingestellt hat, wird anschließend über das HLR 18 geprüft, ob Mobilfunkteilnehmer B sein Mobilfunkendgerät 12 empfangsbereit hat. Falls das Mobilfunkendgerät 12 des Mobilfunkteilnehmers B nicht erreichbar ist, überprüft der SMS-Vermittler 22 über das für den Mobilfunkteilnehmer C zuständige HLR 19, ob das Mobilfunkendgerät 20 des. Mobilfunkteilnehmer C erreichbar und empfangsbereit ist. Sobald signalisiert wird, dass das Mobilfunkendgerät 20 des Mobilfunkteilnehmers C erreichbar ist, wird die SMS an diesen, beispielsweise über die Mobilfunkvermittlungsstelle 26 (MSC), übermittelt. Dabei werden lediglich die entsprechenden Teilnehmerdaten (Empfängeradresse) ohne die anhängende Nachricht ausgetauscht, um möglichst Kapazitäten zu sparen. Erst wenn feststeht, an wen die Übermittlung zu erfolgen hat, wird die Nachricht in der SMS-Zentrale 16 mit der Empfängeradresse verknüpft.

Alternativ zur sequentiellen Überprüfung, wie zuvor beschrieben, kann auch eine parallele Überprüfung der Erreichbarkeit der Mobilfunkendgeräte 12, 20 der Mobilfunkteilnehmer B und C erfolgen. Dazu fragt der SMS-Vermittler 22 nicht sequentiell, sondern zeitgleich die Erreichbarkeit über die zuständigen HLRs 18 und 19 ab. Sobald durch die HLRs 18 und 19 signalisiert wird, dass das Mobilfunkendgerät 20 des Mobilfunkteilnehmers C und nicht das des Mobilfunkteilnehmers B erreichbar ist, wird die SMS an diesen, beispielsweise über die Mobilfunkvermittlungsstelle 26 (MSC), an das Mobilfunkendgerät 20 des Mobilfunkteilnehmers C übermittelt. Die entscheidung, an wen die SMS gesendet werden soll, wird von einer Logik im SMS-Vermittler 22 vorgenommen.

Sollte weder der Mobilfunkteilnehmer B noch Mobilfunkteilnehmer C erreichbar sein, wird die SMS an denjenigen gesendet, dessen Mobilfunkendgerät 12, 20 zuerst seine Empfangsbereitschaft signalisiert. Die SMS-Zentrale 16 überprüft zum Versenden der SMS über den SMS-Vermittler 22 in vorgebbaren Zeitintervallen, wie oben beschrieben, ob ein Teilnehmer B, C erreichbar ist. Dabei genießt der Teilnehmer B die höhere Priorität, wenn beide gleichzeitig Empfangsbereitschaft signalisieren. Grundsätzlich lassen sich mehrere Ersatzgeräte einstellen, wobei eine Reihenfolge festlegbar ist.

## Patentansprüche

1. Verfahren für Mobilfunknetze (14) zur Ver- bzw. Weitervermittlung von digitalen Daten bei Nichterreichbarkeit eines Mobilfunkendgeräts (12), für welches die digitalen Daten bestimmt sind, wobei das Mobilfunknetz (14) eine Sende- und Empfangseinrichtung sowie eine computergesteuerte Verwaltungseinheit mit einem Speicher enthält, mit folgenden Verfahrensschritten:
a) Zwischenspeichern (15) der digitalen Daten,
b) Überprüfen durch die computergesteuerte Verwaltungseinheit, ob ein weiteres Empfangsgerät (20) erreichbar ist,
c) Übermitteln der Daten bei Erreichbarkeit des weiteren Empfangsgeräts (20) an das weitere Empfangsgerät (20),
**dadurch gekennzeichnet, dass**
d) weitere Empfangsgeräte vorgegeben werden können und für die weiteren Endgeräte (20) eine Übermittlungsreihenfolge einstellbar ist.

2. Verfahren für Mobilfunknetze (14) zur Ver- bzw. Weitervermittlung von digitalen Daten bei Nichterreichbarkeit eines Mobilfunkendgeräts (12) nach Anspruch 1, **dadurch gekennzeichnet, dass** die Überprüfung der Erreichbarkeit in vorgebbaren Intervallabständen erfolgt.

3. Verfahren für Mobilfunknetze (14) zur Ver- bzw. Weitervermittlung von digitalen Daten bei Nichterreichbarkeit eines Mobilfunkendgeräts (12) nach einem der Ansprüche 1 oder 2, **dadurch gekennzeichnet, dass** die digitalen Daten wahlweise als SMS oder EMS ausgebildet sind.

4. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 3, **dadurch gekennzeichnet, dass** die digitalen Daten Text- und/oder Sprachdaten sind.

5. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 4, **dadurch gekennzeichnet, dass** das weitere Empfangsgerät durch den Benutzer (B) des Mobilfunkendgeräts (12) vorgebbar ist.

6. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 5, **dadurch gekennzeichnet, dass** je nach Art der Daten ein geeignetes weiteres Empfangsgerät ausgewählt wird.

7. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 6, **dadurch gekennzeichnet, dass** die digitalen Daten gleichzeitig an mehrere weitere Endgeräte weitervermittelt werden.

8. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 7, **dadurch gekennzeichnet, dass** die übermittelten Daten verschlüsselt sind.

9. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 8, **dadurch gekennzeichnet, dass** das weitere Endgerät als ein Mobilfunkendgerät (20) ausgebildet ist.

10. Verfahren für Mobilfunknetze (14) zur Ver- bzw. Weitervermittlung von digitalen Daten bei Nichterreichbarkeit eines Mobilfunkendgeräts (12) nach einem der Ansprüche 1 bis 9, **dadurch gekennzeichnet, dass** die digitalen Daten auf einem Speicher einer SIM-Karte und/oder in dem Mobilfunkendgerät (10, 12, 20) gespeichert werden.

## Claims

1. A method for mobile radio networks (14) for transferring or rerouting digital data in case of unreachability of a mobile terminal (12), for which the digital data are destined, wherein the mobile radio network (14) contains a sending and receiving device as well as a computer-controlled management unit with a memory, comprising the following process steps:
a) temporarily storing (15) the digital data,
b) checking by means of the computer-controlled management unit whether another receiving device (20) is reachable,
c) transferring the data to the other receiving device (20) in case of reachability of the other receiving device (20),
**characterized in that**
d) other receiving devices can be specified and a transmission order can be set for the other receiving devices (20).

2. A method for mobile radio networks (14) for transferring or rerouting digital data in case of unreachability of a mobile terminal (12) according to claim 1, **characterized in that** the check of the reachability is carried out in predeterminable intervals.

3. A method for mobile radio networks (14) for transferring or rerouting digital data in case of unreachability of a mobile terminal (12) according to one of the claims 1 or 2, **characterized in that** the digital data are selectively configured as SMS or EMS.

4. A method for mobile radio networks (14) for transferring or rerouting digital data in case of unreachability of a mobile terminal (12) according to one of the claims 1 to 3, **characterized in that** the digital data are text and/or voice data.

5. A method for mobile radio networks (14) for transferring or rerouting digital data in case of unreachability of a mobile terminal (12) according to one of the claims 1 to 4, **characterized in that** the further receiving device can be predetermined by the user (B) of the mobile terminal (12).

6. A method for mobile radio networks (14) for transferring or rerouting digital data in case of unreachability of a mobile terminal (12) according to one of the claims 1 to 5, **characterized in that** depending on the type of data a suitable further receiving device is selected.

7. A method for mobile radio networks (14) for transferring or rerouting digital data in case of unreachability of a mobile terminal (12) according to one of the claims 1 to 6, **characterized in that** the digital data are simultaneously rerouted to several other receiving devices.

8. A method for mobile radio networks (14) for transferring or rerouting digital data in case of unreachability of a mobile terminal (12) according to one of the claims 1 to 7, **characterized in that** the transmitted data are encrypted.

9. A method for mobile radio networks (14) for transferring or rerouting digital data in case of unreachability of a mobile terminal (12) according to one of the claims 1 to 8, **characterized in that** the further terminal is designed as a mobile terminal (20).

10. A method for mobile radio networks (14) for transferring or rerouting digital data in case of unreachability of a mobile terminal (12) according to one of the claims 1 to 9, **characterized in that** the digital data are stored on a memory of a SIM card and/or in the mobile terminal (10, 12, 20).

## Revendications

1. Procédé pour des réseaux radio mobile (14) destiné à la transmission ou retransmission de données numériques en cas de non-accessibilité à un terminal radio mobile (12), pour lequel les données numériques sont destinées, le réseau radio mobile (14) contenant un dispositif d'émission et de réception ainsi qu'une unité de gestion commandée par ordinateur comprenant une mémoire, comprenant les étapes de procédé suivantes de:
a) mettre les données numériques en mémoire tampon (15),
b) vérifier par l'unité de gestion commandée par ordinateur si un autre dispositif récepteur (20) est accessible,
c) transmettre les données à l'autre dispositif récepteur (20) en cas d'accessibilité de l'autre dispositif récepteur (20),
**caractérisé en ce qu'**
d) il est possible de spécifier d'autres dispositifs récepteurs et de régler un ordre de transmission pour les autres dispositifs récepteurs (20).

2. Procédé pour des réseaux radio mobile (14) destiné à la transmission ou retransmission de données numériques en cas de non-accessibilité à un terminal radio mobile (12) selon la revendication 1, **caractérisé en ce que** la vérification de l'accessibilité se fait dans des intervalles pré-déterminables.

3. Procédé pour des réseaux radio mobile (14) destiné à la transmission ou retransmission de données numériques en cas de non-accessibilité à un terminal radio mobile (12) selon l'une des revendications 1 ou 2, **caractérisé en ce que** les données numériques sont sélectivement conçues comme SMS ou EMS.

4. Procédé pour des réseaux radio mobile (14) destiné à la transmission ou retransmission de données numériques en cas de non-accessibilité à un terminal radio mobile (12) selon l'une des revendications 1 à 3, **caractérisé en ce que** les données numériques sont des données de texte et/ou des données vocales.

5. Procédé pour des réseaux radio mobile (14) destiné à la transmission ou retransmission de données numériques en cas de non-accessibilité à un terminal radio mobile (12) selon l'une des revendications 1 à 4, **caractérisé en ce que** l'autre dispositif récepteur peut être prédéterminé par l'utilisateur (B) du terminal mobile (12).

6. Procédé pour des réseaux radio mobile (14) destiné à la transmission ou retransmission de données numériques en cas de non-accessibilité à un terminal radio mobile (12) selon l'une des revendications 1 à 5, **caractérisé en ce qu'**un autre dispositif récepteur approprié est sélectionné en fonction du type des données.

7. Procédé pour des réseaux radio mobile (14) destiné à la transmission ou retransmission de données numériques en cas de non-accessibilité à un terminal radio mobile (12) selon l'une des revendications 1 à 6, **caractérisé en ce que** les données numériques sont simultanément retransmises à plusieurs autres dispositifs récepteurs.

8. Procédé pour des réseaux radio mobile (14) destiné à la transmission ou retransmission de données numériques en cas de non-accessibilité à un terminal radio mobile (12) selon l'une des revendications 1 à 7, **caractérisé en ce que** les données transmises sont codées.

9. Procédé pour des réseaux radio mobile (14) destiné à la transmission ou retransmission de données numériques en cas de non-accessibilité à un terminal radio mobile (12) selon l'une des revendications 1 à 8, **caractérisé en ce que** l'autre dispositif récepteur est conçu comme un terminal mobile (20).

10. Procédé pour des réseaux radio mobile (14) destiné à la transmission ou retransmission de données numériques en cas de non-accessibilité à un terminal radio mobile (12) selon l'une des revendications 1 à 9, **caractérisé en ce que** les données numériques sont mémorisées dans une mémoire d'une carte SIM et/ou dans le terminal mobile (10, 12, 20).
